# EUROPÄISCHE PATENTSCHRIFT

(11) **EP 2 290 259 B1**
(45) Veröffentlichungstag und Bekanntmachung des Hinweises auf die Patenterteilung: **06.05.2015**
(21) Anmeldenummer: 10169466.9
(22) Anmeldetag: 14.07.2010
(51) Int. Cl.: F16F 9/05, F16F 9/38

(54) **Luftfeder**
Pneumatic spring
Ressort à air

(30) Priorität: 28.08.2009 DE 102009043902
(43) Veröffentlichungstag der Anmeldung: 02.03.2011
(73) Patentinhaber: Continental Teves AG & Co. OHG, 60488 Frankfurt (DE)
(72) Erfinder: Gleu, Jens-Uwe, 30855 Langenhagen (DE)

(56) Entgegenhaltungen:
- DE-A1-102006 027 476
- GB-A- 2 321 944
- US-B1- 6 536 749

## Beschreibung

Die Erfindung betrifft Luftfeder mit einem zwischen einem Luftfederdeckel und einem Luftfeder-Abrollkolben luftdicht eingespannten Luftfederrollbalg aus elastomerem Material, wobei der Deckel und der Luftfederkolben über Anschlusseinrichtungen mit einerseits der gefederten und andererseits der ungefederten Masse verbunden sind. Als Anschlusseinrichtung für den Luftfederkolben dient bei Luftfedern oder Federbeinen üblicherweise der Zylinder des konzentrisch angeordneten Dämpfers, der an seinem zum Fahrwerk weisenden Zylinderende mit einem an das Fahrwerk anschließbarem Auge versehen ist. Der Luftfederrollbalg rollt unter Ausbildung einer Rollfalte innenseitig am Luftfederkolben und außenseitig an einer den Luftfederrollbalg hülsenförmig umfassenden Außenführung ab. Die Luftfeder ist weiterhin mit einer rotationssymmetrischen Schutzabdeckung mit einer flexiblen Wand versehen, welche die Rollfalte vor Verschmutzungen schützt.

Luftfedereinrichtungen, auch kurz Luftfedern genannt, die zwischen Fahrwerk und Karosserie eingespannt sind und die einen Luftfederbalg aufweisen, der wiederum zwischen einem Luftfederdeckel und einem Abrollkolben befestigt ist, sind in einer Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens/Abrollkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Abrollkolben, oder Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Um bei dünneren Rollbälgen eine genügende Tragfähigkeit des Gesamtsystems zu erreichen, werden die Rollbälge bzw. die Luftfedern oder -dämpfer mit so genannten Außenfiihrungen zu versehen, nämlich mit einer den Rollbalg umgebenden rohrförmigen Hülse als "Stützkorsett" oder Stützkörper. So lässt sich beispielsweise ein dünner Rollbalg mit einer dünnen Leichtmetallhülse als Stützkörper auf hohe Innendrücke und damit hohe Tragfähigkeiten bei gleichzeitig gutem Harshness -Verhalten optimieren. Die Außenführungen sind dabei so ausgebildet und angeordnet, dass der Rollbalg einerseits an der Außenseite des Abrollkolbens und andererseits an der Innenoberfläche der Außenführung abrollen kann.

Insbesondere dann, wenn Luftfedern im Fahrwerksbereich von Fahrzeugen angeordnet sind, werden im Stand der Technik oft Faltenbälge als Schutzabdeckungen eingesetzt, die die Luftfeder teilweise umgeben und mit denen z.B. die gegenüber Verschmutzungen empfindliche Rollfalte geschützt wird. Fremdkörper, wie etwa kleine hochgeschleuderte Steine oder Teerstücke aus dem Straßenbelag, können die Gummihaut der Rollbalgfalte nämlich erheblich schädigen und die Lebensdauer verringern. Faltenbälge sind bekanntermaßen in ihrer Längsachse/Längsrichtung dadurch flexibel, dass sich die zickzack-förmig ausgebildeten Falten aneinanderlegen können.

Diese bisher verwendeten Faltenbälge beanspruchen insbesondere unterhalb der Außenführung Bauraum, der oft nicht zur Verfügung steht. Die DE 10 2006 027476 A1 offenbart mit dem dort beanspruchten Teleskopfaltenbalg zwar eine Variante, mit der ein solcher Faltenbalg platzsparender ausgeführt werden kann, jedoch ist der dort gezeigte Teleskopfaltenbalg relativ aufwendig in der Herstellung.

Üblicherweise müssen zur Montage solcher relativ weichen Faltenbälge letztere mit Spannringen an ihren Enden mit den zueinander bewegten Teilen einer Luftfeder verbunden werden, also mit beispielsweise der Außenführung an einem Ende und mit dem Dämpferzylinder am anderen Ende. Ein Aufklemmen ist auch möglich, führt aber im Lauf der Zeit - auch aufgrund von Materialermüdung - eher zu einem undefinierten Verschieben des Faltenbalges, wodurch die eigentliche Schutzfunktion verringert werden kann.

So sind aus den Schriften GB 2 321 944 A und US 6 536 749 B1 Luftfedern bekannt, bei denen der Faltenbalg durch einen weiteren Rollenbalg ersetzt wird. Dieser Rollbalg ist innenseitig am Kolben und außenseitig an der Außenführung befestigt und spiegelverkehrt unterhalb des Luftfederbalges positioniert. Durch den offen ausgebildeten Rollbalg wird der Luftfederkolben und Luftfederbalg vor Verschmutzungen geschützt.

Ein weiteres Problem bei Luftfedern besteht darin, dass bei Minderdruck oder bei nicht vorhandenem Druck im Luftfederbalg, also etwa beim Transport der Luftfeder als solcher zum Montageband in der Autofabrik oder auch beim Ablassen der Luft zu Wartungszwecken, es stets sichergestellt werden muss, dass die Rollfalte erhalten bleibt und kein "Knittern" er folgt, welches den Rollfaltenbereich bei einem Abrollvorgang "ohne Druck" oder bei Lagerung zerstören könnte.

Hierfür wurden bisher entweder Restdruckhalteeinrichtungen eingesetzt, also in der Regel Ventile, die das Entlüften nur bis zu einem bestimmten Restdruck erlauben, oder aber Balgkonstruktionen entwickelt, die aufgrund ihrer spannungsfreien Form in Verbindung mit einer Restbiegesteifigkeit der Balgmembran ein Zusammenfallen der Rollfalte bei fehlendem Innendruck nahezu verhindern.

Die Lösung mit Restdruckhalteeinrichtungen hat neben den Kosten für zusätzliche Bauteile den funktionalen Nachteil einer Behinderung der Balgentlüftung zum Ablassen, da der Restdruck auf einem relativ hohen Niveau gehalten werden muss, um für alle Ein- und Ausfederpositionen einen positiven Restdruck sicherzustellen.

Die Lösung mittels spezieller Balgkonstruktionen funktioniert nicht unter allen Bedingungen und erfordert etwas dickere und damit unkomfortablere Bälge.

Aufgabe der Erfindung war es nun, eine Schutzabdeckung bereitzustellen, mit der ein zuverlässiger Schutz gegen Verschmutzung des Abrollbereiches des Luftfederrollbalgs erreicht werden kann, die einfach montiert werden kann, eine sichere Funktion und lange Lebensdauer gewährt, die möglichst wenig Bauraum benötigt, insbesondere keinen zusätzlichen Bauraum unterhalb der Außenführung beanspruchtund zusätzlich ein knitterfreies Abrollen sowie eine zerstörungsfreie Lagerung von außengeführten Bälgen bei fehlendem Innendruck zu ermöglichen.

Gelöst wird diese Aufgabe durch die Merkmale des Hauptanspruchs. Weitere vorteilhafte Ausbildungen sind in den Unteransprüchen offenbart.

Dabei ist die Schutzabdeckung als rückseitig offener Schutzrollbalg ausgebildet, welcher spiegelbildlich zum Luftfederrollbalg so angeordnet ist, das der Schutzrollbalg unter Ausbildung einer Rollfalte ebenfalls innenseitig am Luftfederkolben oder an der zugehörigen Anschlusseinrichtung und außenseitig an der hülsenförmigen Außenführung abrollt, wobei die Konstruktion so ausgebildet ist, dass die Rollfalten des Luftfederrollbal,ges und des Schutzrollbalges voneinander beabstandet sind und einen ringförmigen Zwischenraum zwischen den Rollfalten des Luftfederrollbalges und des Schutzrollbalges bilden.

Damit ergibt sich einerseits eine hohe Bauraumeffizienz, wobei Bauraum überaus gering bleibt und nach außen im Wesentlichen lediglich durch die Kontur der Außenführung selbst und des Dämpfers begrenzt.

Andererseits wird durch Beabstandung der Rollfalten nunmehr erreicht, dass der rückseitig offene Schutzrollbalg leer mit rollt, ohne eine Kraftwirkung nach außen zu erzeugen. Außerdem entsteht eine Volumenkonstanz des Zwischenvolumens. Eine Dilatation des Zwischenvolumens ist also nicht möglich, wodurch ein Zusammenfallen der Rollfalten verhindert wird. Durch die erfindungsgemäße Ausbildung folgt also das Abrollen des Schutzrollbalges genau dem Abrollen des Luftfederrollbalges.

Die Außenführung dient also in ihrem oberen Bereich als "Stützkorsett" für den Rollbalg und in ihrem unteren Bereich als Führungshülse für den Schutzrollbalg.

Dabei kann die hülsenförmige Außenführung über ihre Länge durchaus unterschiedliche Durchmesser aufweisen, um besser an den Bauraum und an die Bauformen und Materialien der Luftfederteile anpassbar zu sein.

Ein Vorteil besteht darin, dass der ringförmige Zwischenraum zwischen den Rollfalten des Luftfederrollbalges und des Schutzrollbalges mit einem Medium gefüllt ist, dass idealerweise hydraulisch inkompressibel ist, beispielsweise mit einem Fluid. Dies verstärkt noch die Volumenkonstanz des Zwischenvolumens und lässt eine Dilatation noch einmal unwahrscheinlicher werden.

Ein weiterer Vorteil besteht darin, dass der ringförmige Zwischenraum, bzw. das dort vorhandene Medium unter Unterdruck steht, also einen niedrigeren Druck aufweist als den Umgebungsdruck.

Ein solcher Unterdruck korrespondiert bei druckloser Luftfederung mit einer bestimmten Balgdehnung. Als Resultat dieses Unterdruckes bleiben die Rollfalten auch bei druckloser Luftfeder erhalten und die Balgmembran ist sozusagen "vorgespannt". Dies baut eine radiale Steifigkeit des Rollbalges auf, die eine drucklose Lagerung der Luftfeder genauso ermöglicht wie ein druckloses Abrollen.

Eine weitere vorteilhafte Ausbildung besteht darin, dass das inkompressible Medium ein Korrosionsschutzmittel enthält. Damit kann das Hydraulikmedium für den Korrosionsschutz der an der Ausbildung des Zwischenvolumens beteiligten Bauteile genutzt werden.

Die Befestigungen des Schutzrollbalges an der Außenführung und am Abrollkolben oder am Anschlussteil erfolgt entweder durch Spannmittel, wie Klemmringe etc., einerseits am Ende, hier z. B. an dem dem Luftfederdeckel entfernten Ende der hülsenförmigen Schutzabdeckung und andererseits am Luftfederkolben oder an der zugehörigen Anschlusseinrichtung. In besonders gelagerten Fällen können auch andere Befestigungsarten vorgesehen sein, wie etwa eine Klemm- oder Schnappverbindung, die leicht durch Aufstecken oder Einrasten zu montieren ist, oder ein Vulkanisieren.

Aufgrund des sicheren Schutzes der Luftfederrollfalte vor Verschmutzung, aufgrund der leichten Montage und Demontage, aufgrund der langen Lebensdauer und aufgrund der Stabilisierung der Rollfalte ist die erfindungsgemäße Luftfeder besonders vorteilhaft für die Anwendung in einem Kraftfahrzeug geeignet.

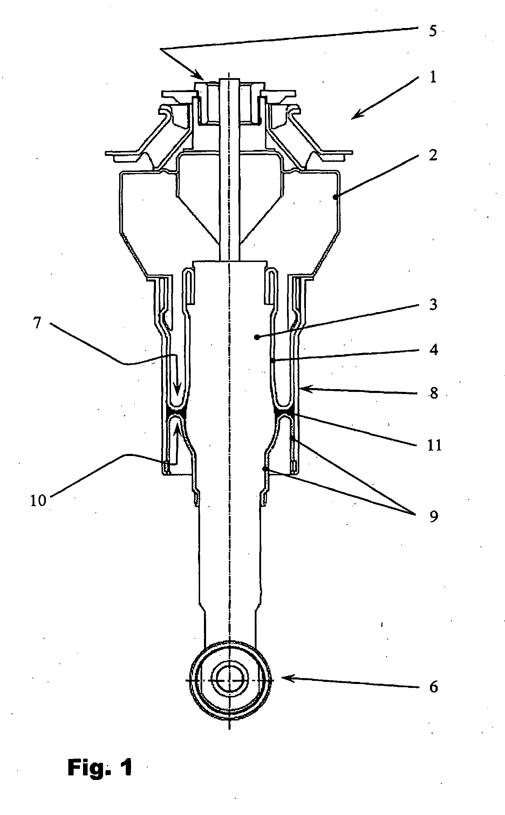

Anhand eines Ausführungsbeispieles soll die Erfindung näher erläutert werden. Die einzige Fig. 1 zeigt Luftfeder 1 mit einem zwischen einem Luftfederdeckel 2 und einem Luftfeder-Abrollkolben 3 luftdicht eingespannten Luftfederrollbalg 4 aus elastomerem Material.

Der Deckel 2 und der Luftfeder-Abrollkolben 3 sind über Anschlusseinrichtungen 5 und 6 mit einerseits der gefederten und andererseits der ungefederten Masse verbunden, wobei letztere hier nicht näher dargestellt sind.

Der Luftfederrollbalg 4 rollt unter Ausbildung einer Rollfalte 7 innenseitig am Luftfeder-Abrollkolben 3 und außenseitig an einer den Luftfederrollbalg 4 hülsenförmig umfassenden Außenführung 8 ab.

Die Luftfeder weist eine rotationssymmetrische, mit einer flexiblen Wand versehene Schutzabdeckung auf, welche die Rollfalte 7 vor Verschmutzungen schützt. Die Schutzabdeckung ist dabei als rückseitig offener Schutzrollbalg 9 ausgebildet ist, welcher spiegelbildlich zum Luftfederrollbalg 4 so angeordnet ist, das der Schutzrollbalg 9 unter Ausbildung einer Rollfalte 10 innenseitig am Luftfeder-Abrollkolben 3 oder ggf. an der Verlängerung der zugehörigen Anschlusseinrichtung und außenseitig an der hülsenförmigen Außenführung 8 abrollt.

Die Rollfalten 7 und 10 des Luftfederrollbalges 4 und des Schutzrollbalges 9 sind voneinander beabstandet, wobei der ringförmige Zwischenraum 11 zwischen den Rollfalten des Luftfederrollbalges und des Schutzrollbalges mit einem hydraulischen, inkompressiblen Medium gefüllt ist.

Das inkompressible Medium im Zwischenraum 11 steht unter Unterdruck und weist einen niedrigeren Druck auf als den Umgebungsdruck. Das inkompressible Medium enthält ein Korrosionsschutzmittel.

Das inkompressible Medium kann natürlich auch ein Gemisch aus mehreren Medien sein, also im Wesentlichen ein Gemisch aus mehreren Gasen und/oder Fluiden. Dadurch kann u.a. die Kompressibilität gezielt beeinflusst werden, um so die technischen Eigenschaften zu optimieren. Bei der hier gezeigten Ausführung in der Fig. 1 ist das inkompressible Medium ein Glykol-Wasser-Gemisch. Durch eine solche Ausbildung des Stützmediums als Glykol-Wasser-Mischung sind eine hinreichende Temperaturresistenz und Verträglichkeit mit den eingesetzten Balgmaterialien und ein Korrosionsschutz der Anbauteile von Innen gegeben.

### Bezugszeichenliste

### (Teil der Beschreibung)

- 1: Luftfeder
- 2: Luftfederdeckel
- 3: Luftfeder-Abrollkolben
- 4: Luftfederrollbalg
- 5: Anschlusseinrichtung
- 6: Anschlusseinrichtung
- 7: Rollfalte des Luftfederrollbalges
- 8: Außenführung
- 9: Schutzrollbalg
- 10: Rollfalte des Schutzrollbalges
- 11: Zwischenraum zwischen den Rollfalten

## Patentansprüche

1. Luftfeder (1) mit einem zwischen einem Luftfederdeckel (2) und einem Luftfeder-Abrollkolben (3) luftdicht eingespannten Luftfederrollbalg (4) aus elastomerem Material,
- wobei der Luftfederdeckel (2) und der Luftfeder-Abrollkolben (3) über Anschlusseinrichtungen (5, 6) mit einerseits der gefederten und andererseits der ungefederten Masse verbunden sind,
- wobei der Luftfederrollbalg (4) unter Ausbildung einer Rollfalte (7) innenseitig am Luftfeder-Abrollkolben (3) und außenseitig an einer den Luftfederrollbalg (4) hülsenförmig umfassenden Außenführung (8) abrollt,
- mit einer rotationssymmetrischen Schutzabdeckung mit einer flexiblen Wand, welche die Rollfalte (7) vor Verschmutzungen schützt,
- wobei die Schutzabdeckung als Schutzrollbalg (9) ausgebildet ist, welcher spiegelbildlich zum Luftfederrollbalg (4) so angeordnet ist, das der Schutzrollbalg (9) unter Ausbildung einer Rollfalte (10) innenseitig am Luftfeder-Abrollkolben (3) und außenseitig an der hülsenförmigen Außenführung (8) abrollt,
- wobei die Rollfalten (7, 10) des Luftfederrollbalges (4) und des Schutzrollbalges (9) voneinander beabstandet sind und einen ringförmigen Zwischenraum (11) zwischen den Rollfalten (7, 10) des Luftfederrollbalges (4) und des Schutzrollbalges (9) bilden,
**dadurch gekennzeichnet,**
- **dass** der ringförmige Zwischenraum (11) zwischen den Rollfalten (7, 10) des Luftfederrollbalges (4) und des Schutzrollbalges (9) mit einem hydraulisch inkompressiblen Medium gefüllt ist oder der Zwischenraum (11) unter einem Unterdruck steht.

2. Luftfeder nach Anspruch 1, bei der das Medium im ringförmigen Zwischenraum (11) ein Korrosionsschutzmittel enthält.

3. Kraftfahrzeug mit einer Luftfeder nach Anspruch 1 oder 2.

## Claims

1. Pneumatic spring (1), with a pneumatic-spring concertina (4) which is tension-mounted, air-tight, between an pneumatic-spring cover (2) and a pneumatic-spring unrolling piston (3) and made from elastomeric material,
- the pneumatic-spring cover (2) and the pneumatic-spring unrolling piston (3) being connected via connection devices (5, 6) to the sprung mass, on the one hand, and to the unsprung mass, on the other hand,
- and, so as to form a rolling fold (7), the pneumatic-spring concertina (4) rolling, on the inside, off on a pneumatic-spring unrolling piston (3) and, on the outside, off an external guide (8) surrounding the pneumatic-spring concertina (4) in a sleeve-shaped manner,
- with a rotationally symmetrical protective covering having a flexible wall which protects the rolling fold (7) from soiling,
- the protective covering being designed as a protective concertina (9) which is arranged mirror-symmetrically to the pneumatic-spring concertina (4) such that, so as to form a rolling fold (10), the protective concertina (9) rolls, on the inside, on the pneumatic-spring unrolling piston (3) and, on the outside, on the sleeve-shaped external guide (8),
- the rolling folds (7, 10) of the pneumatic-spring concertina (4) and of the protective concertina (9) being spaced apart from one another and forming a ring-shaped interspace (11) between the rolling folds (7, 10) of the pneumatic-spring concertina (4) and the protective concertina (9),
**characterized**
- **in that** the ring-shaped interspace (11) between the rolling folds (7, 10) of the pneumatic-spring concertina (4) and of the protective concertina (9) is filled with a hydraulically incompressible medium or the interspace (11) is under a vacuum.

2. Pneumatic spring according to Claim 1, in which the medium in the ring-shaped interspace (11) contains an anti-corrosion agent.

3. Motor vehicle having a pneumatic spring according to Claim 1 or 2.

## Revendications

1. Ressort à air (1) comprenant un soufflet roulant de ressort à air (4) serré de manière étanche à l'air entre un couvercle de ressort à air (2) et un piston déroulant de ressort à air (3), en matériau élastomère,
- le couvercle de ressort à air (2) et le piston déroulant de ressort à air (3) étant connectés par le biais de dispositifs de raccordement (5, 6) d'une part à la masse suspendue sur ressort et d'autre part à la masse non suspendue sur ressort,
- le soufflet roulant de ressort à air (4) roulant, en réalisant un pli roulant (7), du côté intérieur, sur le piston déroulant de ressort à air (3) et, du côté extérieur, sur un guide extérieur (8) entourant en forme de douille le soufflet roulant de ressort à air (4),
- avec un recouvrement de protection à symétrie de révolution présentant une paroi flexible qui protège le pli roulant (7) contre les encrassements,
- le recouvrement de protection étant réalisé sous forme de soufflet roulant de protection (9) qui est disposé avec une symétrie spéculaire par rapport au soufflet roulant de ressort à air (4) de telle sorte que le soufflet roulant de protection (9), en réalisant un pli roulant (10), roule, du côté intérieur, sur le piston déroulant de ressort à air (3) et, du côté extérieur, sur le guide extérieur (8) en forme de douille,
- les plis roulants (7, 10) du soufflet roulant de ressort à air (4) et du soufflet roulant de protection (9) étant espacés l'un de l'autre et formant un espace intermédiaire de forme annulaire (11) entre les plis roulants (7, 10) du soufflet roulant de ressort à air (4) et du soufflet roulant de protection (9),
**caractérisé en ce que**
- l'espace intermédiaire de forme annulaire (11) entre les plis roulants (7, 10) du soufflet roulant de ressort à air (4) et du soufflet roulant de protection (9) est rempli d'un fluide hydrauliquement incompressible ou l'espace intermédiaire (11) est soumis à une dépression.

2. Ressort à air selon la revendication 1, dans lequel le fluide dans l'espace intermédiaire de forme annulaire (11) présente un agent anticorrosion.

3. Véhicule automobile comprenant un ressort à air selon la revendication 1 ou 2.
